# FASCICULE DE BREVET EUROPEEN

(11) **EP 3 083 358 B1**
(45) Date de publication et mention de la délivrance du brevet: **28.02.2018**
(21) Numéro de dépôt: 14821706.0
(22) Date de dépôt: 14.11.2014
(51) Int. Cl.: B60K 6/485, B60W 30/18, B60W 20/00, B60W 30/192, B60W 30/194, B60W 30/20, B60W 10/06, B60W 10/08

(54) **PROCEDE DE DEMARRAGE A FROID D'UN MOTEUR THERMIQUE ET DISPOSITIF DE MOTORISATION ASSOCIE**
VERFAHREN ZUM KALTSTARTEN EINER WÄRMEKRAFTMASCHINE UND ZUGEHÖRIGE ANTRIEBSVORRICHTUNG
METHOD FOR COLD-STARTING A HEAT ENGINE AND ASSOCIATED DRIVE DEVICE

(30) Priorité: 20.12.2013 FR 1363155
(43) Date de publication de la demande: 26.10.2016
(73) Titulaire: Renault s.a.s., 92100 Boulogne-Billancourt (FR)
(72) Inventeur: COTTE, Philippe, F-92120 Montrouge (FR); GUEZET, Jacky, F-92150 Suresnes (FR)
(86) Numéro de dépôt international: PCT/FR2014/052917
(87) Numéro de publication internationale: WO 2015/092179

(56) Documents cités:
- DE-A1- 10 041 535
- DE-A1-102007 050 114
- DE-A1-102007 050 117
- GB-A- 2 371 632
- JP-A- H05 328 528
- US-A1- 2012 247 424

## Description

### DOMAINE TECHNIQUE DE L'INVENTION

L'invention concerne un procédé de démarrage à froid d'un moteur thermique de véhicule automobile, et un dispositif de motorisation apte à la mise en oeuvre d'un tel procédé.

### ETAT DE LA TECHNIQUE

Lors du démarrage à froid d'un moteur thermique, plus particulièrement un moteur de véhicule automobile qui est resté pendant longtemps dans une ambiance froide, le moteur présente des instabilités de combustion au cours d'une première phase de montée en température du moteur qui se poursuit au régime de ralenti.

Ces instabilités ont des conséquences néfastes pour les passagers du véhicule et pour l'environnement. D'une part, les fluctuations du régime moteur sont importantes et dégradent le confort à l'intérieur du véhicule, du fait de vibrations perceptibles par les passagers et par le niveau acoustique fluctuant. D'autre part, les instabilités de combustion conduisent le moteur à émettre des aldéhydes (RHCO) qui sont des composés malodorants et nuisibles à l'environnement.

Pour résoudre ce problème, on peut de manière connue accélérer la montée en température du moteur en dégradant son rendement de combustion, par exemple en retardant une partie de l'injection du carburant dans les cylindres. Mais un tel procédé permet seulement de raccourcir la phase pendant laquelle la combustion est instable. Par ailleurs, il conduit à une surconsommation de carburant.

On sait également que les moteurs thermiques de certains véhicules automobiles peuvent être associés à des machines électriques réversibles pouvant fonctionner en mode « moteur » ou en mode de « génératrice ». En mode de génératrice, la machine électrique est un alternateur qui fournit un courant électrique destiné à être stocké dans une batterie d'accumulateurs ; en mode moteur, elle est au contraire alimentée par du courant précédemment stocké dans la batterie d'accumulateurs et elle fournit un couple moteur qui s'ajoute à celui du moteur thermique pour être transmis aux roues du véhicule.

On connaît plusieurs procédés de démarrage à froid d'un moteur thermique qui visent à résoudre les problèmes d'instabilité de combustion exposés plus haut en tirant parti d'un tel dispositif de motorisation.

Par exemple, la publication DE 100 41 535 décrit un procédé de démarrage à froid d'un moteur thermique similaire à celui décrit par le préambule de la revendication 1 et la publication EP2067646-B1 divulgue un procédé de régulation d'un événement de démarrage d'un moteur dans un système motopropulseur hybride de véhicule comprenant un moteur à combustion interne, un générateur électrique et une batterie électriquement couplée à un moteur électrique et un engrenage formant des chemins de passage de la puissance mécanique, parallèles depuis le moteur aux roues de traction du véhicule, le moteur étant mécaniquement connecté aux roues de traction du véhicule, le procédé comprenant les étapes d'exploitation du générateur comme moteur et de démarrage du moteur en utilisant un couple du générateur durant le cycle de démarrage du moteur, selon lequel le couple du générateur complète le couple d'exploitation du moteur lorsque le moteur tourne à des vitesses plus basses qu'un régime de ralenti calibré pendant le cycle de démarrage du moteur, caractérisé par l'étape de régulation d'une puissance cible du générateur en boucle fermée en utilisant une puissance réelle du générateur en tant que grandeur de rétroaction tout le long d'un événement de démarrage de moteur.

Un tel procédé vise à éviter les instabilités de combustion du moteur caractérisé par des pics de couple dans une zone dite de résonance précédant l'atteinte du régime de ralenti du moteur. Mais il ne permet pas d'éliminer les émissions d'aldéhydes au démarrage, lesquelles ne peuvent pas être traitées par les dispositifs anti-pollution connus, et il ne règle pas le problème d'instabilité de la combustion du moteur au régime de ralenti proprement dit.

On connaît aussi de la publication EP1439296-B1 un dispositif de transmission de couple comprenant un moteur générateur, un moteur à combustion interne, un arbre d'entraînement et un mécanisme de transmission, qui comportent
- Un premier arbre tournant, qui reçoit le couple du moteur à combustion interne,
- Un deuxième arbre tournant correspondant à l'arbre d'entraînement, et
- Un troisième arbre tournant, qui est couplé au moteur générateur et qui agit par le couple provenant du moteur générateur, de manière que le couple reçu par le premier arbre tournant soit transmis à l'arbre d'entraînement par l'intermédiaire du troisième arbre tournant, de sorte que le couple provenant du moteur à combustion interne soit transmis à l'arbre d'entraînement par le couple provenant du moteur générateur et comprenant, en outre, des moyens de commande, pour commander le moteur générateur,
dans lequel il est prévu un moyen de détection, pour détecter des pulsations de couple produites dans le couple provenant du moteur à combustion interne avant que les pulsations du couple soient transmises à l'arbre d'entraînement, et en ce que les moyens de commande sont conçus pour commander le moteur générateur, pour produire un couple de réduction ayant des pulsations de même phase que les pulsations de couple, pour réduire des effets des pulsations du couple détecté sur l'arbre d'entraînement.

Un tel dispositif permet de limiter les effets vibratoires des instabilités de combustion du moteur à combustion interne, mais il manque de précision. En particulier, une seule combustion présentant un couple nettement plus élevé que les précédents peut amener le moteur générateur à réduire brutalement le couple générateur, avec un risque de calage du moteur thermique dû à la précision de la commande. En outre, un tel procédé ne supprime pas les instabilités de combustion, donc ne traite pas le problème d'émission des aldéhydes.

### RESUME DE L'INVENTION

L'invention propose de remédier aux défauts des procédés connus de démarrage à froid des moteurs thermiques, dans le cas où ils sont associés à une machine électrique réversible pouvant fonctionner en mode moteur ou en mode de génératrice.

Elle propose pour cela un procédé de démarrage à froid d'un moteur thermique apte à entraîner au moins une roue motrice d'un véhicule automobile, ledit moteur étant associé à une machine électrique réversible pouvant fonctionner selon un mode de génératrice ou selon un mode moteur dans lesquels ladite machine électrique participe au couple disponible sur un arbre rotatif de sortie de couple pour l'entraînement du véhicule, caractérisé en ce qu'il comporte des étapes consistant à :
- déterminer la valeur d'un paramètre représentatif du fonctionnement à froid du moteur thermique ;
- comparer la valeur dudit paramètre avec un seuil ;
- tant que ledit paramètre est inférieur audit seuil :
   a. augmenter le couple thermique du moteur thermique jusqu'à une valeur, supérieure au couple de démarrage dudit moteur, à laquelle sa combustion est la plus stable ; et,
   b. faire fonctionner la machine électrique en mode de génératrice pour absorber l'écart positif de couple appliqué au couple thermique.

### BREVE DESCRIPTION DES FIGURES

D'autres caractéristiques et avantages de l'invention apparaîtront à la lecture d'un mode de réalisation non limitatif de celle-ci, en se reportant aux dessins annexés sur lesquels :
- la figure 1 est une vue schématique illustrant un groupe motopropulseur selon l'invention ;
- la figure 2 est un organigramme illustrant les différentes étapes d'un mode de réalisation du procédé de démarrage selon l'invention ; et,
- la figure 3 est un graphique illustrant les fluctuations de régime d'un moteur lors d'un démarrage à froid respectivement avec et sans l'invention.

### DESCRIPTION DETAILLEE DES FIGURES

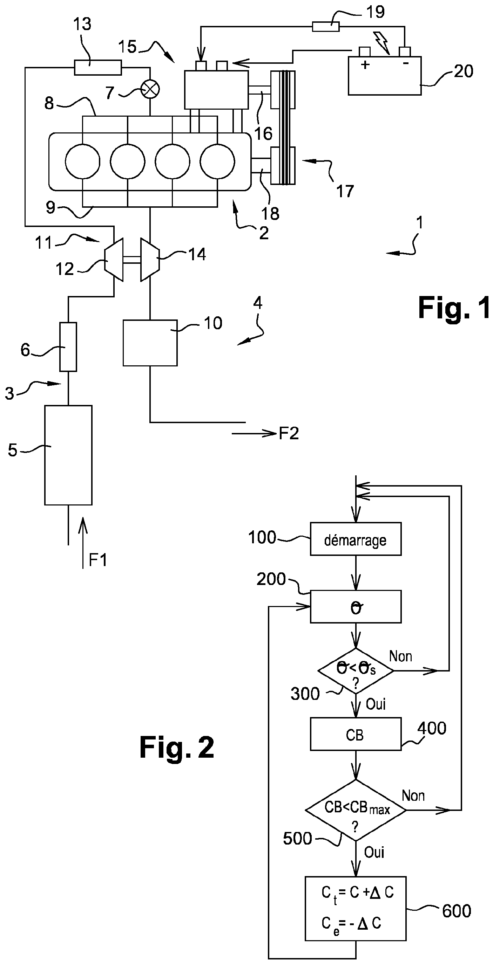

Comme on peut le voir sur la figure 1, le dispositif de motorisation 1 selon l'invention peut équiper un véhicule, notamment un véhicule automobile. Il comprend un moteur thermique 2, c'est-à-dire un moteur à combustion interne, par exemple un moteur diesel, qui se présente ici de manière non limitative sous la forme d'un moteur à quatre cylindres en ligne suralimenté.

Pour son fonctionnement, un tel moteur thermique 2 aspire de l'air dans le sens de la flèche F1 par l'intermédiaire d'une ligne d'admission 3, et rejette ses gaz de combustion dans une ligne d'échappement 4 afin de les évacuer dans l'atmosphère extérieure dans le sens de la flèche F2.

Le moteur consomme également du carburant, par exemple du gazole, qui est amené au moteur grâce à un système d'injection (non représenté), par exemple un système d'injection directe qui comporte une rampe d'alimentation à très haute pression commune aux cylindres et au moins un injecteur de carburant par cylindre apte à injecter le carburant directement dans chacun des cylindres.

De manière non limitative, la ligne d'admission d'air 3 peut comprendre un filtre à air 5, un débitmètre 6 permettant de déterminer le débit massique d'air frais admis dans le moteur 2, un volet d'admission 7 d'air permettant de réguler le débit admis dans le moteur 2 et un collecteur d'admission d'air 8, ou répartiteur 8, amenant l'air traversant le volet d'admission 7 dans les différents cylindres du moteur 2.

De manière non limitative, la ligne d'échappement 4 peut comprendre un collecteur d'échappement 9, et au moins un dispositif de post-traitement 10 des gaz de combustion du moteur, par exemple un catalyseur d'oxydation 10, un filtre à particules 10, un piège à oxydes d'azote 10 ou un catalyseur de réduction sélective des oxydes d'azote 10.

S'agissant ici d'un moteur 2 suralimenté, le moteur thermique 2 comporte par ailleurs un turbocompresseur 11 dont un compresseur 12 est interposé dans la ligne d'admission 3 entre le débitmètre 6 et le volet d'admission 7. De plus, il est possible qu'un échangeur de température 13 soit disposé dans la ligne d'admission 3, entre le compresseur 12 et le volet d'admission 7, de manière à refroidir l'air comprimé par le compresseur 12.

Le compresseur 12 est entraîné par une turbine 14 du turbocompresseur 11, qui est interposée dans la ligne d'échappement 4 entre le moteur 2 et le dispositif de post-traitement 10. Classiquement, la ligne d'échappement 4 peut être pourvue d'une conduite de dérivation (non représentée) qui contourne la turbine 14 et qui comporte une vanne de décharge à l'échappement (également appelée vanne « waste gate ») pour pouvoir limiter l'énergie apportée par les gaz d'échappement à la turbine 14, et donc pour pouvoir limiter la pression fournie par le compresseur 12. En variante, le turbocompresseur 11 peut comporter une turbine à géométrie variable, c'est-à-dire pourvue d'ailettes d'inclinaison variable permettant également de moduler l'énergie prélevée sur les gaz d'échappement.

De plus, le moteur thermique 2 peut comporter un ou plusieurs circuits de recirculation de gaz d'échappement à l'admission (non représentés), plus particulièrement un circuit dit EGR haute pression et/ou un circuit EGR basse pression (EGR : acronyme anglais pour « Exhaust Gas Recycling »), sans nuire à la généralité de l'invention.

De manière connue en soi, le moteur thermique 2, ici un moteur diesel 2, fonctionne en mélange pauvre pour la production de son couple, dit couple thermique Cₜ. Ce couple thermique Cₜ résulte de la combustion dans le moteur 2 d'un mélange d'air frais (auquel peuvent s'ajouter des gaz d'échappement recyclés à l'admission) et de carburant dans des quantités bien définies par un calculateur du moteur 2 et dans des proportions inférieures aux proportions stoechiométriques quand le moteur fonctionne en mélange pauvre.

Pour la mise en oeuvre du procédé de démarrage selon l'invention, le dispositif de motorisation 1 comprend en outre une machine électrique réversible 15, tel qu'illustré à la figure 1.

La machine électrique 15, par exemple un alterno-démarreur 15 séparé du volant d'inertie du moteur thermique 2, et dont un arbre rotatif 16 est accouplé via des moyens de transmission 17 à un arbre rotatif 18 de sortie de couple du moteur thermique 2, par exemple un vilebrequin, est apte à fonctionner en mode moteur ou en mode de génératrice, sous la supervision d'un boîtier de commande 19.

En mode de génératrice, la machine électrique 15 est un alternateur qui fournit un courant électrique destiné à être stockée dans une batterie 20 d'accumulateurs en prélevant un couple électrique Cₑ résistant ; en mode moteur, elle est au contraire alimentée par du courant précédemment stocké dans la batterie 20 et elle fournit un couple électrique Cₑ moteur qui s'ajoute au couple à celui Cₜ du moteur thermique pour être transmis à l'arbre rotatif 18 de sortie de couple du moteur thermique, c'est-à-dire, quand la chaîne de transmission du véhicule est embrayée, aux roues du véhicule.

Le mode de fonctionnement du dispositif de motorisation 1 est le suivant : L'enfoncement de la pédale d'accélérateur (non représentée) du véhicule par le conducteur est très généralement traduite par un calculateur (non représenté) en une consigne de couple à transmettre aux roues du véhicule.

Lors d'une phase de démarrage à froid du véhicule, la pédale d'accélérateur n'est pas enfoncée et le moteur est débrayé. La consigne de couple est égale à la consigne de couple de démarrage C disponible sur l'arbre rotatif 18 de sortie du moteur 2. Ce couple de démarrage C peut par exemple être avantageusement défini à partir de l'enseignement de la demande de la publication FR2980529-A1, qui divulgue un procédé optimisé de commande d'injection de carburant au démarrage d'un moteur thermique 2, le procédé comprenant une étape de détermination d'une quantité de carburant de consigne au démarrage en fonction d'une différence entre une accélération de consigne et une accélération instantanée du moteur 2.

On comprend de ce qui précède que dans le cas d'un dispositif de motorisation 1 comprenant une machine électrique 15, selon l'invention, le couple de démarrage C, nécessaire au démarrage du moteur thermique 2, notamment après l'accostage de son régime de ralenti, peut être obtenu soit sous la forme de couple thermique Cₜ, soit sous la forme de couple électrique Cₑ, soit sous la forme d'une combinaison des deux. Dans tous les cas, la valeur du couple C est égale à la somme algébrique des valeurs du couple thermique Cₜ et du couple électrique Cₑ, selon l'équation : C = Cₜ+Cₑ, le couple électrique prenant une valeur positive en mode moteur et une valeur négative en mode génératrice de la machine électrique 15.

Un calculateur du véhicule (non représenté) effectue la répartition en fonction de différents paramètres du véhicule et/ou du dispositif de motorisation 1. Plus précisément, dans le cas d'un démarrage à froid du moteur thermique 2, le couple de démarrage C est généralement très faible, par exemple inférieur au quart de la charge maximale du moteur 2, quel que soit le régime.

Il est alors particulièrement avantageux de faire fonctionner le moteur thermique 2 sur un point de charge, c'est-à-dire à une valeur de couple thermique Cₜ, plus élevée que le couple de démarrage C, de préférence le couple auquel la combustion du moteur thermique est la plus stable.

En d'autres termes, on augmente le couple thermique Cₜ qui serait strictement nécessaire au démarrage, d'un écart positif de couple thermique ΔC, le couple thermique résultant C+ΔC minimisant les instabilités de combustion, ce qui a pour effet de diminuer les vibrations perceptibles dans le véhicule et les émissions d'aldéhydes par le moteur thermique 2.

Une telle valeur peut être définie expérimentalement au banc moteur par des essais préalables, par exemple en équipant le moteur thermique 2 de capteurs de pression de cylindre aptes à mesurer les pressions engendrées par chaque cycle de combustion individuel. Les instabilités de combustion se traduisent en effet par une forte dispersion statistique des signaux de pression de cylindre entre les différents cycles.

La couple auquel le moteur thermique 2 présente la meilleure stabilité de combustion peut varier en fonction du régime. On pourra donc prévoir, lors du démarrage du moteur 2 qui amène le régime de rotation de celui-ci d'une valeur nulle jusqu'au régime de ralenti, d'ajuster le couple thermique résultant C+ΔC pour chaque valeur de régime de rotation du moteur, mesurée par exemple grâce à un capteur de régime associé au vilebrequin du moteur 2. Dans une variante simplifiée, on réglera le couple thermique résultant C+ΔC à la valeur qui minimise les instabilités de combustion au régime de ralenti uniquement.

L'augmentation du couple thermique est compensée par le prélèvement de l'écart positif de couple ΔC par la machine électrique 15, qui fonctionne en mode de génératrice, selon l'équation Cₑ = -ΔC.

Toutefois, le boîtier de commande 19 de la machine électrique comprend des moyens de surveillance de la charge CB de la batterie 20. Si le niveau de charge CB atteint un niveau de charge maximal CBₘₐₓ, le boîtier de commande 19 interdit que la machine électrique 15 soit utilisée en mode de génératrice.

Avantageusement, l'énergie récupérée lors du fonctionnement de la machine électrique 15 en mode de génératrice pourra être restituée ultérieurement dans d'autres phases d'utilisation du véhicule pour participer à sa propulsion, la machine électrique 15 fonctionnant en mode moteur.

La figure 2 illustre les différentes étapes d'un mode de réalisation du procédé de démarrage d'un moteur thermique 2 selon l'invention, utilisant un dispositif de motorisation 1 tel qu'il vient d'être exposé.

Le procédé comprend une étape de démarrage 100 du moteur thermique 2. Il comprend ensuite plusieurs étapes réalisées de manière itérative.

Il comprend ainsi une première étape de détermination 200 dans laquelle on mesure un paramètre représentatif du mode de fonctionnement à froid du moteur 2. Dans le mode de réalisation présenté ici sur la figure 2, il s'agit d'une valeur de température θ représentative du fonctionnement du moteur, par exemple la température d'eau ou la température d'huile (mesurées par des capteurs connus). Dans un autre mode non représenté, il peut s'agir de la durée écoulée τ depuis le démarrage du moteur 2, qui est stockée dans un calculateur du véhicule.

Le procédé se poursuit par une étape de test 300, dans laquelle le paramètre θ représentatif du fonctionnement du moteur est comparé avec un seuil maximum θₛ. Dans le mode non représenté dans lequel le paramètre est la durée écoulée τ depuis le démarrage du moteur, on compare cette durée θ avec un seuil maximum de durée τₛ. Si le paramètre θ,τ est au moins égal au seuil θₛ,τₛ, aucune action n'est entreprise. En d'autres termes, le procédé ne pourra reprendre qu'avec une nouvelle étape de démarrage 100.

Dans le cas contraire, le procédé oriente vers une étape 400 de détermination de la charge de la charge CB de la batterie 20. Puis, à une étape de test 500, on détermine si le niveau de charge CB est inférieur au niveau de charge maximal CBₘₐₓ de la batterie. Si tel n'est pas le cas, le procédé s'achève et ne pourra reprendre qu'avec une nouvelle étape de démarrage 100. Dans le cas contraire, le procédé oriente vers une étape 600 de répartition du couple de démarrage C, au cours de laquelle :
- le couple thermique Cₜ du moteur thermique 2 est augmenté, d'un écart positif de couple thermique ΔC, jusqu'à la valeur qui minimise ses instabilités de couple ; et,
- l'écart positif de couple ΔC est prélevé par la machine électrique qui fonctionne en mode de génératrice.

A l'issue de l'étape 600, le procédé reprend à l'étape 200 après l'écoulement d'un pas de temps donné, par exemple quelques dizaines de millisecondes.

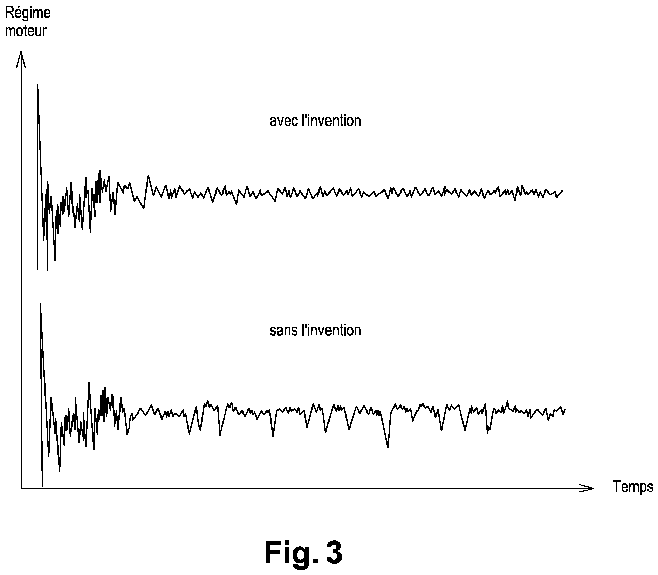

Sur la figure 3, on a représenté les fluctuations de régime d'un moteur thermique lors d'un démarrage à froid, respectivement avec et sans la mise en oeuvre du procédé selon l'invention. Par souci de lisibilité, on a décalé vers le haut la courbe représentant les variations du régime obtenue en utilisant le procédé, afin qu'elle se distingue mieux de la courbe qui est obtenue avec les procédés de démarrage connus.

On observe que la mise en oeuvre du procédé permet d'obtenir une meilleure stabilité du régime, notamment dans la phase où le régime de ralenti est atteint, ce qui se traduit par moins de pics individuels de régime par rapport à l'autre courbe. Cette stabilité du régime de rotation est due à une meilleure stabilité de la combustion dans le moteur thermique fonctionnant sur un point de charge (couple) plus élevé, en d'autres termes à une moindre variabilité de la pression de cylindre d'un cycle individuel de combustion à un autre.

## Revendications

1. Procédé de démarrage à froid d'un moteur (2) thermique apte à entraîner au moins une roue motrice d'un véhicule automobile, ledit moteur étant associé à une machine électrique (15) réversible pouvant fonctionner selon un mode de génératrice ou selon un mode moteur dans lesquels ladite machine électrique (15) participe au couple (C) disponible sur un arbre rotatif (18) de sortie de couple pour l'entraînement du véhicule, le procédé comportant des étapes consistant à :
- déterminer la valeur d'un paramètre (θ,τ) représentatif du fonctionnement à froid du moteur thermique (2) ;
- comparer la valeur dudit paramètre (θ,τ) avec un seuil (θₛ,τₛ);
- et **caractérisé en ce que** tant que ledit paramètre (θ,τ) est inférieur audit seuil (θₛ,τₛ) :
a. augmenter le couple thermique (Cₜ) du moteur thermique (2) jusqu'à une valeur, supérieure au couple de démarrage (C) dudit moteur (2), à laquelle sa combustion est la plus stable ; et,
b. faire fonctionner la machine électrique (15) en mode de génératrice pour absorber l'écart positif de couple (ΔC) appliqué au couple thermique.

2. Procédé selon la revendication 1, dans lequel le couple (Cₜ) du moteur thermique (2) est augmenté lorsque celui-ci est au régime de ralenti.

3. Procédé selon l'une des revendications 1 ou 2, dans lequel la valeur du couple (Cₜ) thermique du moteur thermique (2) maximisant sa stabilité de combustion est déterminée au préalable par des essais expérimentaux.

4. Procédé selon l'une quelconque 1 à 3, dans lequel le paramètre représentatif du fonctionnement à froid du moteur thermique (2) est une valeur de température (θ) d'eau ou d'huile.

5. Procédé selon l'une quelconque des revendications 1 à 3, dans lequel le paramètre représentatif du fonctionnement à froid du moteur thermique (2) est la durée (τ) écoulée depuis le démarrage du moteur (2).

6. Procédé selon l'une quelconque des revendications précédentes, dans lequel on fait fonctionner la machine électrique (15) en mode de génératrice en fonction de la charge (CB) d'une batterie (20) alimentée par la machine électrique (15).

7. Procédé selon la revendication 6, dans lequel on fait fonctionner la machine électrique (15) en mode de génératrice seulement si la charge (CB) de la batterie est inférieure à un seuil maximal de charge (CBₘₐₓ).

8. Dispositif de motorisation (1) pour la mise en oeuvre du procédé selon l'une quelconque des revendications 1 à 7, comportant un moteur (2) thermique comprenant un arbre rotatif (18) de sortie de couple pour l'entraînement d'au moins une roue motrice d'un véhicule automobile, **caractérisé en ce qu'**il comporte également une machine électrique (15) réversible associée au moteur (2) thermique, ladite machine (15) pouvant fonctionner selon un mode génératrice ou selon un mode moteur dans lesquels elle participe au couple (C) disponible sur l'arbre (18).

## Patentansprüche

1. Kaltstartverfahren eines Verbrennungsmotors (2), der mindestens ein Antriebsrad eines Kraftfahrzeugs antreiben kann, wobei der Motor mindestens einer umkehrbaren elektrischen Maschine (15) zugeordnet ist, die in einem Generatorbetrieb oder in einem Motorbetrieb arbeiten kann, wobei die elektrische Maschine (15) am auf einer Drehmoment-Abtriebsdrehwelle (18) für den Antrieb des Fahrzeugs verfügbaren Drehmoment (C) mitwirkt, wobei das Verfahren Schritte aufweist, die darin bestehen:
- den Wert eines Parameters (θ,τ) zu bestimmen, der für den Kaltbetrieb des Verbrennungsmotors (2) repräsentativ ist;
- den Wert des Parameters (θ,τ) mit einer Schwelle (θₛ,τₛ) zu vergleichen;
und **dadurch gekennzeichnet ist, dass**, so lange der Parameter (θ,τ) niedriger als die Schwelle (θₛ,τₛ) ist:
a. das thermische Drehmoment (Cₜ) des Verbrennungsmotors (2) bis auf einen Wert höher als das Startdrehmoment (C) des Motors (2) zu erhöhen, bei dem seine Verbrennung am stabilsten ist; und
b. die elektrische Maschine (15) im Generatorbetrieb zu betreiben, um die positive Drehmomentabweichung (ΔC) zu absorbieren, die an das thermische Drehmoment angewendet wird.

2. Verfahren nach Anspruch 1, wobei das Drehmoment (Cₜ) des Verbrennungsmotors (2) erhöht wird, wenn dieser im Leerlaufbetrieb ist.

3. Verfahren nach einem der Ansprüche 1 oder 2, wobei der Wert des thermischen Drehmoments (Cₜ) des Verbrennungsmotors (2), der seine Verbrennungsstabilität maximiert, vorab durch experimentelle Versuche festgelegt wird.

4. Verfahren nach einem der Ansprüche 1 bis 3, wobei der für den Kaltbetrieb des Verbrennungsmotors (2) repräsentative Parameter ein Wasser- oder Öltemperaturwert (Θ) ist.

5. Verfahren nach einem der Ansprüche 1 bis 3, wobei der für den Kaltbetrieb des Verbrennungsmotors (2) repräsentative Parameter die seit dem Starten des Motors (2) vergangene Zeit (T) ist.

6. Verfahren nach einem der vorhergehenden Ansprüche, wobei die elektrische Maschine (15) abhängig von der Ladung (CB) einer von der elektrischen Maschine (15) versorgten Batterie (20) im Generatorbetrieb betrieben wird.

7. Verfahren nach Anspruch 6, wobei die elektrische Maschine (15) nur im Generatorbetrieb betrieben wird, wenn die Ladung (CB) der Batterie unter einer maximalen Ladeschwelle (CBₘₐₓ) liegt.

8. Antriebsvorrichtung (1) zur Durchführung des Verfahrens nach einem der Ansprüche 1 bis 7, die einen Verbrennungsmotor (2) aufweist, der eine Drehmoment-Abtriebsdrehwelle (18) für den Antrieb mindestens eines Antriebsrads eines Kraftfahrzeugs enthält, **dadurch gekennzeichnet, dass** sie ebenfalls eine umkehrbare elektrische Maschine (15) aufweist, die dem Verbrennungsmotor (2) zugeordnet ist, wobei die Maschine (15) in einem Generatorbetrieb oder in einem Motorbetrieb arbeiten kann, in denen sie am auf der Welle (18) verfügbaren Drehmoment (C) mitwirkt.

## Claims

1. Method for cold-starting a heat engine (2) capable of driving at least one drive wheel of a motor vehicle, said engine being combined with a reversible electric machine (15) that can operate in a generator mode or in a drive mode in which said electric machine (15) contributes to the torque (C) available on a rotary torque output shaft (18) for driving the vehicle, the method comprising steps consisting of:
- determining the value of a parameter (θ,τ) representative of the cold operation of the heat engine (2) ;
- comparing the value of said parameter (θ,τ) with a threshold (θₛ,τₛ);
and **characterized in that**
- as long as said parameter (θ,τ) is lower than said threshold (θₛ,τₛ):
a. increasing the thermal torque (Cₜ) of the heat engine (2) to a value higher than the starting torque (C) of said engine (2), at which the combustion of same is more stable; and
b. operating the electric machine (15) in the generator mode in order to absorb the positive torque difference (ΔC) applied to the thermal torque.

2. Method according to Claim 1, **characterized in that** the torque (Cₜ) of the heat engine (2) is increased when same is running at idle speed.

3. Method according to one of Claims 1 or 2, **characterized in that** the value of the thermal torque (Cₜ) of the heat engine (2) that maximizes the combustion stability of same is determined in advance using experimental tests.

4. Method according to any one of Claims 1 to 3, **characterized in that** the parameter representing cold operation of the heat engine (2) is a water or oil temperature value (θ).

5. Method according to any one of Claims 1 to 3, **characterized in that** the parameter representing cold operation of the heat engine (2) is the time (τ) elapsed since the engine (2) was started.

6. Method according to any one of the preceding claims, **characterized in that** the electric machine (15) is operated in generator mode as a function of the charge (CB) of a battery (20) powered by the electric machine (15).

7. Method according to Claim 6, **characterized in that** the electric machine (15) is operated in generator mode only if the charge (CB) of the battery is less than a maximum charge threshold (CBₘₐₓ).

8. Motorization device (1) for implementing the method according to any one of Claims 1 to 7, comprising a heat engine (2) having a rotary torque output shaft (18) for driving at least one drive wheel of a motor vehicle, **characterized in that** it also includes a reversible electric machine (15) combined with the heat engine (2), said machine (15) being able to operate in a generator mode or a drive mode in which the machine contributes to the torque (C) available on the shaft (18).
